Europäisches Patentamt

European Patent Office

Office européen des brevets

(11) Veröffentlichungsnummer: **0 348 537 B1**

# EUROPÄISCHE PATENTSCHRIFT

(45) Veröffentlichungstag der Patentschrift: **01.04.92**

(51) Int. Cl.⁵: **G01B 5/06**, G01B 7/10

(21) Anmeldenummer: **88110203.2**

(22) Anmeldetag: **27.06.88**

(54) **Vorrichtung zur Messung der Dicke von einem auf einer Unterlage liegenden Druckbogen.**

(43) Veröffentlichungstag der Anmeldung:
**03.01.90 Patentblatt 90/01**

(45) Bekanntmachung des Hinweises auf die
Patenterteilung:
**01.04.92 Patentblatt 92/14**

(84) Benannte Vertragsstaaten:
**CH FR IT LI NL SE**

(56) Entgegenhaltungen:
EP-A- 0 025 976      WO-A-82/01698
AU-A- 478 949        CH-A- 589 841
DE-A- 3 221 379      FR-A- 2 312 011
GB-A- 1 506 232

(73) Patentinhaber: **Heidelberger Druckmaschinen Aktiengesellschaft**
**Kurfürsten-Anlage 52-60 Postfach 10 29 40**
**W-6900 Heidelberg 1(DE)**

(72) Erfinder: **Spiegel, Nikolaus Dr.**
**Dantestrasse 13**
**W-6909 Walldorf(DE)**
Erfinder: **Krestyn, Karlheinz**
**Paul-Lincke-Weg 2**
**W-6906 Leimen 3(DE)**
Erfinder: **Blaser, Peter Theobald**
**Neuwiesenweg 3**
**W-6912 Dielheim(DE)**

(74) Vertreter: **Stoltenberg, Baldo Heinz-Herbert et al**
**c/o Heidelberger Druckmaschinen AG**
**Kurfürsten-Anlage 52-60**
**W-6900 Heidelberg 1(DE)**

## Beschreibung

Die Erfindung betrifft eine Vorrichtung zur Messung der Dicke von auf einer Unterlage liegenden Druckbogen.

In der Papierverarbeitungsbranche, insbesondere in der Druckindustrie, ist man daran interessiert, das zu bearbeitende Papier bzw. den Bogen vor der Bearbeitung zu messen, um daraus Rückschlüsse auf die notwendigen Maschineneinstellwerte zu erhalten. Da jeder Bogen unterschiedliche Dickenwerte aufweisen kann, ist es erforderlich, jeden Bogen, nachdem er von einem Bogenstapel entnommen wurde und in den Bogenausrichtebereich gelangt ist, einzeln zu messen.

Bei bekannten Vorrichtungen der o.g. Art, wie beispielsweise aus der DE-A 32 21 379 bekannt, ist oberhalb des Ausrichttisches und außerhalb des Wirkbereiches der Seitenziehmarke ein schwenkbarer Hebelarm angebracht, an dessen Ende eine Rolle vorgesehen ist, die die Papieroberfläche berührt. Eine Dickenänderung des Bogens verursacht eine Vertikalbewegung des Hebelarmes, die von einem direkt mit des Hebelarm verbundenen Meßgerät erfaßt wird.

Nachteilig wirkt sich dabei aus, daß durch diese Meßmethode neben der Papierberührung, die von der bei Bogenrotationsdruckmaschinen zum Einsatz kommenden Ziehmarken zur Papierbogenseitenausrichtung verursacht wird, ein weiterer direkter Kontakt mit dem zu messenden Bogen hergestellt werden muß. Dieser weitere direkte Kontakt stellt einen zusätzlichen Faktor bei der Möglichkeit der Beschädigung der Papieroberfläche dar. Es herrscht daher allgemein das Bestreben vor, die mechanischen Einwirkungen auf den Druckbogen weitestgehend zu vermeiden.

Der Erfindung liegt daher die Aufgabe zugrunde, eine Vorrichtung der o.g. Art zu schaffen, bei der die Möglichkeit einer Beschädigung der Papieroberfläche vermindert wird.

Die Aufgabe wird erfindungsgemäß dadurch gelöst, daß eine Ziehmarke mit einem Wegmesser versehen ist, der eine vom Hebel ausgeführte Vertikalbewegung mißt, und daß der vom Wegmesser ermittelte Wert einer elektronischen Auswerteeinrichtung zugeführt wird.

Der Vorteil der Erfindung ist darin zu sehen, daß die Papierdickenmessung in die vorhandene Ziehmarke integriert ist. Durch diese Maßnahme erhält die Ziehrolle neben ihrer eigentlichen Funktion des Papierniederdrückens noch eine weitere Funktion, nämlich das Anheben oder Absenken des drehbar gelagerten Hebelarmes und, daraus folgend, die Ertastung der Papierdicke. Die bisher übliche, unabhängig von der Ziehmarke arbeitende Vorrichtung zur Messung der Papierdicke kann vollständig entfallen. Neben den Einsparungen an Material- und Montagekosten wird ein neuralgischer Punkt bezüglich der Möglichkeit der Oberflächenbeschädigung des Bogens vollkommen entfernt. Ferner erlaubt der drehbar angeordnete Hebel das Erfassen verschiedenster Druckmaterialien, da der über die Ziehrolle die Oberfläche des Papiers berührende Hebel sich der Dicke der verschiedenen Druckmaterialien selbsttätig anpaßt.

Eine weitere Ausgestaltungsform der Erfindung ist dadurch gekennzeichnet, daß die Ziehmarke als zweiarmiger Hebel ausgebildet ist, daß der Hebel an der der Ziehrolle gegenüberliegenden Seite mit einer parallel zur Unterlage des Papiers angeordneten, als Zunge ausgebildeten Meßfläche versehen ist und daß ein induktiver Wegmesser oberhalb der Meßfläche mit Wirkrichtung auf die Meßfläche an der Ziehmarke angeordnet ist.

Diese Ausgestaltung der Erfindung erlaubt die Verwendung eines induktiven Weggebers, mit dem in vorteilhafter Weise eine hohe Auflösung des Meßbereiches erzielbar ist.

Ferner erlauben weitere Ausgestaltungsformen der Erfindung, daß eine bestimmte Hebelposition als Ausgangsposition für künftige Messungen definiert werden kann, indem beim Start eines Produktionslaufes und bevor der erste Bogen zur Messung gelangt, die augenblicklich eingenommene Hebelposition als Ausgangsposition für Messungen der Bogendicke definiert wird. Eine manuelle Justierung des Hebelarmes auf unterschiedliche Bogendicke kann dadurch entfallen. Bei Überschreitung einer gewissen Toleranz der Papierdicke kann durch die elektronische Auswerteeinrichtung ebenso eine steuerungstechnische Reaktionsanweisung erfolgen wie beim Einlaufen eines Doppel- oder Mehrfachbogens.

Doppel- oder Mehrfachbogen werden aufgrund der Vielfachmessung der zu erwartenden statistischen Bogendicke durch die Auswerteelektronik direkt erkannt und angezeigt.

Ein Ausführungsbeispiel der Erfindung ist in der Zeichnung dargestellt.

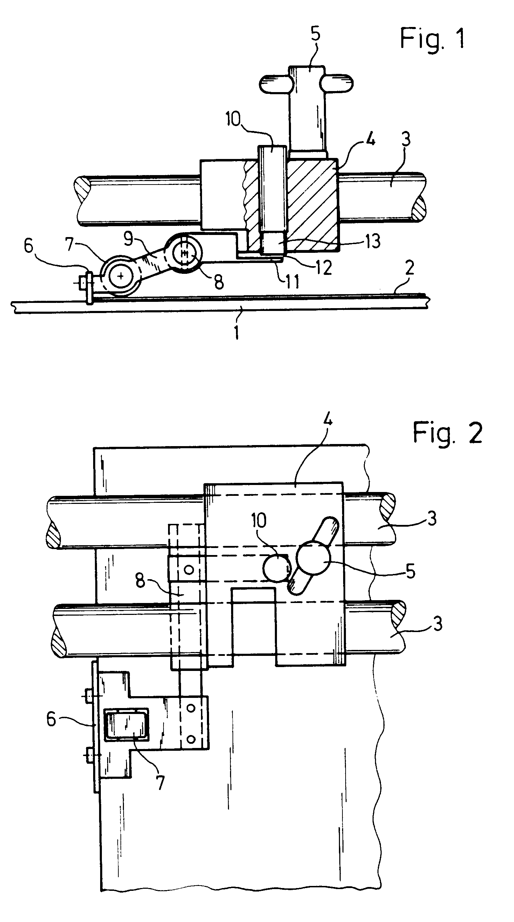

Fig. 1 zeigt die Seitenansicht der Erfindung,

Fig. 2 zeigt die Draufsicht der Erfindung.

Der Gegenstand der Erfindung besteht aus einem Grundkörper 4, der an einer über dem Anlegetisch 1 verlaufenden Traverse 3 verschiebbar angeordnet ist. Zur Fixierung des Grundkörpers 4 auf der Traverse 3 ist eine Feststellschraube 5 vorgesehen. Der Grundkörper 4 weist an seiner zum Anlegetisch 1 gerichteten Seite ein Zapfenlager 8 auf, das zur Aufnahme eines zweiarmigen Hebels 9 dient, der parallel zur Traverse 3 verläuft. Ein Arm des zweiarmigen Hebels 9 ist vom Grundkörper 4 weggerichtet und im Bereich des Zapfenlagers 8 zum Auflagetisch 1 hin abgewinkelt. Ferner ist dieser Arm des zweiarmigen Hebels 9 in seinem Endbereich mit einer Ziehrolle 7 versehen, die die Oberfläche eines auf dem Anlegetisch 1 eingelaufenen Bogens 2 berührt. Am Ende dieses Armes des zweiarmigen Hebels 9 ist ein Anschlag 6 angebracht, der den eingelaufenen Bogen 2 ausrichtet. Der zum Grundkörper 4 gerichtete Arm des zweiarmigen Hebels 9 ist an seinem Ende mit einer als Meßfläche ausgebildeten Zunge 11 versehen, die parallel zur Oberfläche des Anlegetisches 1 und parallel zur Grundfläche des Grundkörpers 4 verläuft. Rechtwinklig zur Zunge 11 ist in den Grundkörper 4 ein Wegmesser 10 so eingelassen, daß der Wirkbereich des Wegmessers 10 auf die Zunge 11 gerichtet ist. Zwischen der Zunge 11 und dem mit dem Wirkbereich versehenen Ende 13 des Wegmessers 10 befindet sich ein kleiner Spalt 12.

Ein über den Anlegetisch 1 einlaufender Bogen 2 wird der Seitenausrichtung zugeführt; um die Seitenausrichtung des Bogens 2 nicht zu behindern wird der mit der Ziehrolle 7 verbundene Arm des zweiarmigen Hebels 9 während der Seitenausrichtung angehoben, wodurch eine Drehbewegung um den Drehpunkt des Zapfenlagers 8 erfolgt. Diese Drehung um das Zapfenlager 8 bewirkt ein gleichzeitiges Absenken des mit der Zunge 11 versehenen Armes des zweiarmigen Hebels 9.

Der im Grundkörper 4 eingelassene induktive Wegmesser 10 registriert den Grad der Absenkung bzw. die Vergrößerung des zwischen der Zunge 11 und dem Wirkbereich des induktiven Wegmessers 10 vorhandenen Spaltes 12. Der vom Wegmesser 10 ermittelte Wert wird einem nicht dargestellten, handelsüblichen Mikrocomputersystem der Auswertung zugeführt.
Liegt der Wert außerhalb der Toleranz, erfolgt ein Maschinenstopp und ein Warnsignal.

Vor dem Einlaufen des ersten Bogens 2 wird die Position des Hebels 9 vom Wegmesser 10 erfaßt und an das nicht dargestellte Mikrocomputersystem weitergeleitet. Der übermittelte Meßwert wird vom Mikrocomputersystem als Bezugsgröße für die künftigen Messungen definiert. Beim gleichzeitigem Einlaufen einer Vielzahl von Bogen 2 vergrößert sich der Spalt 12 um ein proportional der Vielzahl der Bogen 2 gegebenes Maß, so daß von dem Mikrocomputersystem ein Signal für Mehrfachbogenerkennung ausgegeben wird.

## TEILELISTE

1. Anlegetisch
2. Bogen
3. Traverse
4. Grundkörper
5. Feststellschraube
6. Anschlag
7. Ziehrolle
8. Zapfenlager
9. Hebel
10. Wegmesser
11. Zunge
12. Spalt
13. Ende

## Patentansprüche

1. Vorrichtung zur Messung der Dicke von einem auf einer Unterlage liegendem Druckbogen, bestehend aus einer oberhalb des Druckbogens angeordneten Tasteinrichtung, die den einlaufenden Bogen an dessen Oberfläche berührt,
**dadurch gekennzeichnet,**
daß die Tasteinrichtung als Ziehmarke ausgebildet ist, wobei die Ziehrolle (7) als Tastelement wirkt und die Vertikalbewegung der Ziehrolle (7) gemessen wird, und daß der von der Tasteinrichtung ermittelte wert einer elektronischen Auswerteeinrichtung zugeführt wird.

2. Vorrichtung nach Anspruch 1,
**dadurch gekennzeichnet,**
daß die Ziehmarke als zweiarmiger Hebel (9) ausgebildet ist, daß der Hebel (9) an der der Ziehrolle (7) gegenüberliegenden Seite mit einer parallel zur Unterlage des Papiers angeordneten Zunge (11) versehen ist, und daß ein induktiver Wegmesser (10) oberhalb der Zunge mit Wirkrichtung auf die Zunge (11) an der Ziehmarke angeordnet ist.

3. Vorrichtung nach Anspruch 1,
**dadurch gekennzeichnet,**
daß die Position des Hebels (9) vor der Messung als Ausgangsposition für die folgenden Messungen definiert ist.

4. Vorrichtung nach Anspruch 1,
**dadurch gekennzeichnet,**
daß bei Überschreitung einer gewissen Bogendickentoleranz ein Warnsignal ausgelöst und die Maschine gestoppt wird.

5. Vorrichtung nach Anspruch 1,
**dadurch gekennzeichnet,**
daß bei Messungen, die ein ganzzahliges Vielfaches der Bogendicke ergeben, ein Signal für Mehrfachbogen ausgegeben und/oder die Maschine gestoppt wird.

## Claims

1. Device for measuring the thickness of a sheet lying on a support, said device comprising a detecting device provided above said sheet to be printed and contacting the surface of the oncoming sheet,
characterized in
that said detecting device is designed as a pull lay, a pull roller (7) acting as a detecting element, and the vertical motion of said pull roller (7) being measured, and that the value determined by said detecting device is fed to an electronic evaluation device.

2. Device according to Claim 1,
characterized in
that the pull lay is designed as a two-armed lever (9), that said lever (9) is provided with a tongue (11) disposed parallel to the support of the paper on the side of said lever which is located opposite the pull roller (7), and that above the tongue (11) an inductive distance measuring device (10) is provided at the pull lay and is effective in a direction towards said tongue (11).

3. Device according to Claim 1,
characterized in
that, before measuring, the position of the lever (9) is defined as a starting position for the succeeding measurements.

4. Device according to Claim 1,
characterized in
that a warning signal is issued and the machine is stopped when a given tolerane range of sheet thickness is exceeded.

5. Device according to Claim 1,
characterized in
that a multiple-sheet signal is issued and/or the machine is stopped when measurements indicate the presence of an integral multiplicity of sheet thicknesses.

**Revendications**

1. Dispositif destiné à mesurer l'épaisseur d'une feuille d'imprimerie, reposant sur un support, constitué d'un dispositif de palpage placé au-dessus de la feuille d'imprimerie, qui est en contact avec la surface supérieure de la feuille entrant, caractérisé en ce que le dispositif de palpage est configuré en marque de traction, le rouleau de traction (7) servant d'élément de palpage et le déplacement vertical du rouleau de traction (7) étant mesuré, et en ce que la valeur déterminée par le dispositif de palpage est envoyée à un dispositif d'exploitation électronique.

2. Dispositif selon la revendication 1, caractérisé en ce que la marque de traction est un levier (9) à deux bras, en ce que le levier (9) est pourvu, sur le coté opposé au rouleau de traction (7), d'une languette (11) parallèle au support du papier, et en ce qu'un capteur de distance (10) inductif est placé sur la marque de traction, au-dessus de la languette, avec un sens d'action dirigé vers la languette (11).

3. Dispositif selon la revendication 1, caractérisé en ce que la position du levier (9), avant la mesure, est définie comme étant la position initiale pour les mesures suivantes.

4. Dispositif selon la revendication 1, caractérisé en ce qu'un signal d'alarme est déclenché et la machine stoppée, dans le cas où une certaine tolérance d'épaisseur de feuille est dépassée.

5. Dispositif selon la revendication 1, caractérisé en ce qu'un signal de présence de plusieurs feuilles est délivré et/ou la machine stoppée, dans le cas où les mesures indiquent un multiple entier de l'épaisseur de feuille.

Fig. 1

Fig. 2